# EUROPEAN PATENT SPECIFICATION

(11) **EP 1 837 725 B1**
(45) Date of publication and mention of the grant of the patent: **31.03.2010**
(21) Application number: 07004015.9
(22) Date of filing: 27.02.2007
(51) Int. Cl.: G05B 19/401, G01B 21/06

(54) **Image measuring machine moving an imaging means in a nonstop measurement mode**
Bildvermessungssystem, wobei ein Bildmessgerät in einem Non-Stop-Modus bewegt wird
Système de mesure par images, l'appareil de mesure se mouvant en continu

(30) Priority: 20.03.2006 JP 2006077628
(43) Date of publication of application: 26.09.2007
(73) Proprietor: Mitutoyo Corporation, Kawasaki-shi, Kanagawa-ken 213-0012 (JP)
(72) Inventor: Miyakura, Jota, Kawasaki-shi Kanagawa 213-8533 (JP); Ariga, Kozo, Kawasaki-shi Kanagawa 213-0012 (JP); Kurihara, Masaki, Kawasaki-shi Kanagawa 213-8533 (JP)
(74) Representative: Altenburg, Udo

(56) References cited:
- WEIHUA SHENG ET AL: "Optimal Planning of a Mobile Sensor for Aircraft Rivet Inspection" ROBOTICS AND AUTOMATION, 2005. PROCEEDINGS OF THE 2005 IEEE INTERNATIONAL CONFERENCE ON BARCELONA, SPAIN 18-22 APRIL 2005, PISCATAWAY, NJ, USA,IEEE, 18 April 2005 (2005-04-18), pages 3181-3186, XP010871886 ISBN: 0-7803-8914-X
- AGGARWAL ET AL.: "The Angular-Metric Traveling Salesman Problem" SIAM JOURNAL ON COMPUTING, vol. 29, no. 3, January 2000 (2000-01), pages 221-225, XP002474186
- ARKIN ET AL.: "OPTIMAL COVERING TOURS WITH TURN COSTS" SIAM J. COMPUT., vol. 35, no. 3, 2005, pages 531-566, XP002474187
- CHO M W; KIM K: "New inspection planning strategy for sculptured surfaces using coordinate measuring machine" INTERNATIONAL JOURNAL OF PRODUCTION RESEARCH., vol. 33, no. 2, 1995, pages 427-444, XP009097858 GB
- LU C; WU M H; MYLAR P; HEALEY R: "Developing an information model for LINDO software input-optimal path planning for CMM" PROCEEDINGS OF 1ST WORLD CONGRESS ON INTELLIGENT MANUFACTURING PROCESSES AND SYSTEMS - 13-17 FEB. 1995 - MAYAGUEZ/SAN JUAN, PUERTO RICO, vol. 2, 1995, pages 1231-1235, XP009097860 Puerto Rico

## Description

### BACKGROUND OF THE INVENTION

### Field of the Invention

The present invention relates to an image measuring system, image measuring method and image measuring program having a nonstop measurement mode for moving an imaging means relative to a measurement stage that supports an object to be measured and taking in instantaneous image information without making a stop at a designated measurement location.

### Description of the Related Art

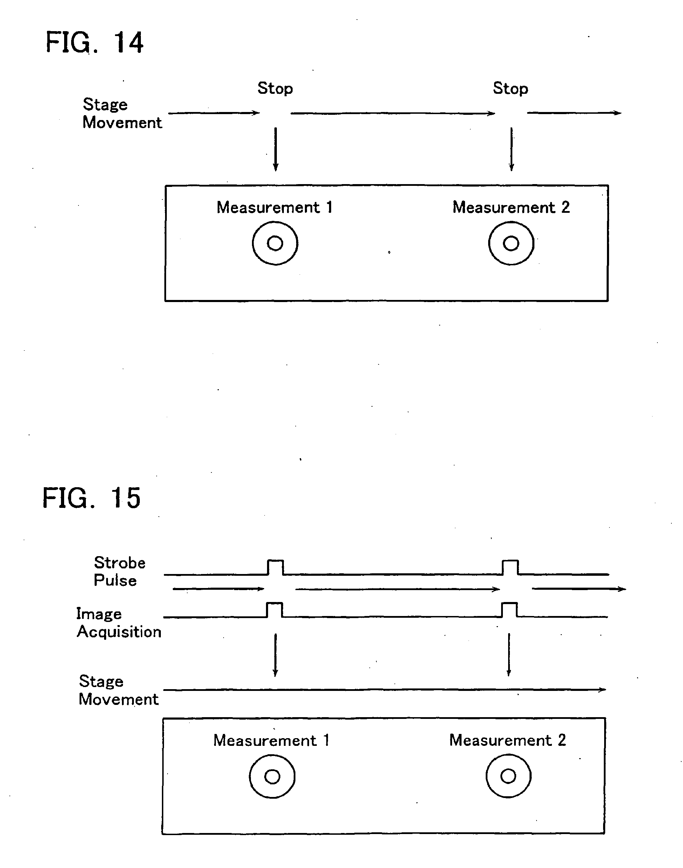

A conventional CNC image measuring machine moves a measurement stage relative to an imaging means such as a CCD camera, as shown in Fig. 14, and makes a stop at a measurement location. Then, it adjusts the amount of illuminative light to acquire image information about an object to be measured, and applies image processing such as measuring tool setting and edge detection to the acquired image information, thereby executing a measurement at one measurement location. This measurement is repeatedly executed as Measurement 1, Measurement 2, ... at all measurement locations to complete measurements at required locations (hereinafter such the measurement mode is referred to as a "standard mode").

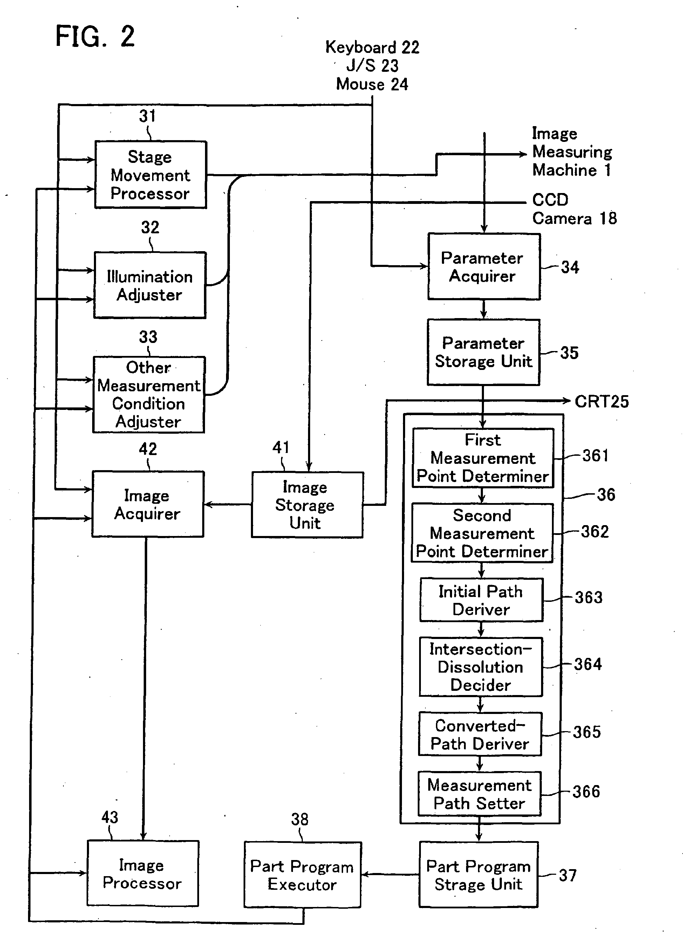

In contrast, for the purpose of improving the measurement throughput, an image measuring machine is proposed, which has a measurement mode for measuring without making no stop of the measurement stage relative to the imaging means even at the measurement location (hereinafter such the measurement mode is referred to as a "nonstop measurement mode") (see JP 2004-535587A, paragraphs 0005-0006, Fig. 2). This image measuring machine irradiates the object with strobe illumination or uses a shuttered CCD camera to capture instantaneous image information without making no stop of the measurement stage at measurement locations as shown in Fig. 15. Then, it takes in the captured instantaneous image information for image measuring.

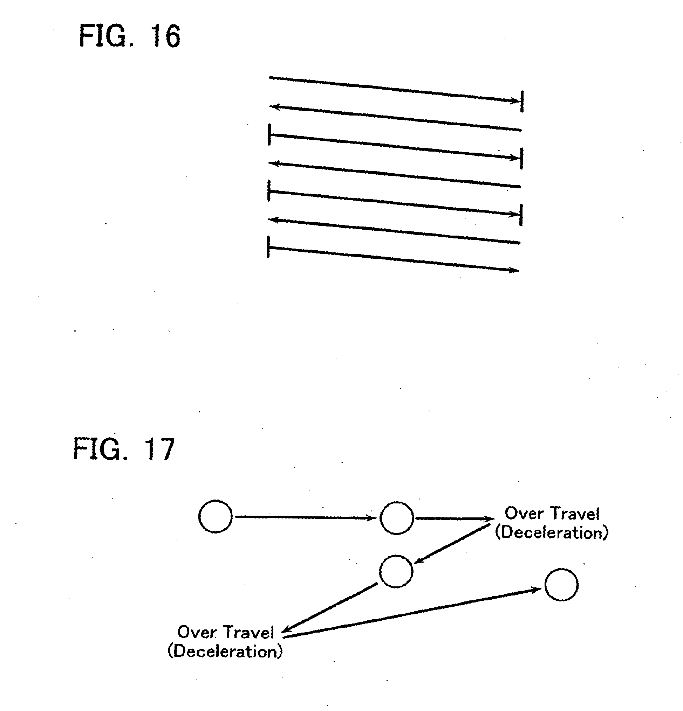

The above-described conventional image measuring machine has no problem if the measurement locations are arranged along a straight line. To the contrary, if they are not arranged along a straight line, a measurement path may be determined in a prearranged order as shown by the arrows in Fig. 16, or through a method of searching the closest adjacent point.

Therefore, as shown in Fig. 17, a turning location (hereinafter referred to as a bent point) on a path that passes through every measurement point has a larger angle, which results in a larger variation angle of the direction of the measuring machine advancing. For example, a measurement path in the form of a square (with directional variation angles of 90º) or a Z-shape (with directional variation angles of 90º or more), for example, requires a decrease in the stage speed at the bent point to follow it, causing a problem associated with a longer measurement time and so forth.

The present invention has been made in consideration of such a problem and has an object to provide an image measuring system, image measuring method and image measuring program capable of preventing a decrease in the speed of movement of a movement mechanism, smoothly moving the movement mechanism, and reducing the measurement time.

The article Weihua Sheng et al: "Optimal Planning of a Mobile Sensor for Aircraft Rivet Inspection" Robotics and Automation. 2005, Proceedings of the 2005 IEEE International Conference on Barcelona, Spain 18-22 April 2005, Piscataway, NJ, USA, IEEE, 18 April 2005, pages 3181-3186 discloses an image measuring system for moving an imaging means relative to a measurement stage that supports an object to be measured and taking an instantaneous image information about the object at any of a plurality of measurement locations, thereby performing image measuring.

The article Aggrawal et al.: "The Angular-Metric Traveling Salesman Problem" Siam Journal on Computing, vol. 29, no. 3, January 2000, pages 331-225 discloses a method for solving the problem of minimizing the total angle cost of a TSP tour for a set of points in Eucledian space, where the angle cost of the tour is the sum of the direction changes at the points.

Arkin et al.: "Optimal covering tours with turn costs" Siam Journal on Computing, vol. 35, no. 3, 2005, pages 531-566 discloses a method for finding an optimal tour with turn cost.

### SUMMARY OF THE INVENTION

The above problem is solved by an image measuring system according to claim 1, the image measuring method according to claim 5 and an image measuring program according to claim 9 of the present invention. Advantageous embodiments of the present invention are claimed in the dependent claims.

The present invention provides an image measuring system for moving an imaging means relative to a measurement stage that supports an object to be measured and taking in instantaneous image information about the object at any of a plurality of measurement locations, thereby performing image measuring. The system comprises a measurement point acquirer operative to acquire measurement points; a first measurement point determiner operative to determine a first measurement point for beginning a measurement among the measurement points acquired by the measurement point acquirer; a second measurement point determiner operative to determine a second measurement point to be measured next to the first measurement point; a first estimation calculator operative to calculate a first estimation on the basis of a distance between last two measurement points of order-determined measurement points having measurement orders already determined, a distance between a measurement point having the last measurement order of the order-determined measurement points and a next candidate measurement point or a next measurement point candidate of order-undetermined measurement points having no measurement orders determined, and a bent angle specified between two segments connecting the last two measurement points of the order-determined measurement points to the next candidate measurement point in the measurement order; a next measurement point determiner operative to determine a next measurement point of next candidate measurement points on the basis of first estimations calculated by the first estimation calculator using the order-undetermined measurement points as such next candidate measurement points; an initial path deriver operative to derive an initial path that passes through all measurement points from the first measurement point via every measurement point sequentially on the basis of a determination resulted from the first measurement point determiner, a determination resulted from the second measurement point determiner, and a determination resulted from the next measurement point determiner; an intersection-dissolution decider operative to decide, when there is a location of intersection in a specific intersection form on a path intersecting location in the initial path, whether the intersection is to be dissolved or retained on the basis of a second estimation calculated based on distances between measurement points before and after paths that form the intersection and bent angles between the paths at the measurement points, and a third estimation calculated based on distances between measurement points before and after paths newly connected if the intersection is dissolved and bent angles between the paths at the measurement points; a converted-path deriver operative to convert the paths in the initial path in accordance with a decision resulted from the intersection-dissolution decider to derive a converted path that dissolves the location of intersection in the specific intersection form in the initial path; and a measurement path setter operative to set the converted path derived at the converted-path deriver to a measurement path.

The present invention also provides an image measuring method for moving an imaging means relative to a measurement stage that supports an object to be measured and taking in instantaneous image information about the object at any of a plurality of measurement locations, thereby performing image measuring. The method comprises a measurement point acquisition step of acquiring measurement points; a first measurement point determination step of determining a first measurement point for beginning a measurement among the measurement points acquired; a second measurement point determination step of determining a second measurement point to be measured next to the first measurement point; a first estimation calculation step of calculating a first estimation on the basis of a distance between last two measurement points of order-determined measurement points having measurement orders already determined, a distance between a measurement point having the last measurement order of the order-determined measurement points and a next candidate measurement point or a next measurement point candidate of order-undetermined measurement points having no measurement orders determined, and a bent angle specified between two segments connecting the last two measurement points of the order-determined measurement points to the next candidate measurement point in the measurement order; a next measurement point determination step of determining a next measurement point of next candidate measurement points on the basis of first estimations calculated using the order-undetermined measurement points as such next candidate measurement points; an initial path derivation step of deriving an initial path that passes through all measurement points from the first measurement point via every measurement point sequentially on the basis of a determination resulted from the first measurement point determination step, a determination resulted from the second measurement point determination step, and a determination resulted from the next measurement point determination step; an intersection-dissolution decision step of deciding, when there is a location of intersection in a specific intersection form on a path intersecting location in the initial path, whether the intersection is to be dissolved or retained on the basis of a second estimation calculated based on distances between measurement points before and after paths that form the intersection and bent angles between the paths at the measurement points, and a third estimation calculated based on distances between measurement points before and after paths newly connected if the intersection is dissolved and bent angles between the paths at the measurement points; a converted-path derivation step of converting the paths in the initial path in accordance with a decision resulted from the intersection-dissolution decision step to derive a converted path that dissolves the location of intersection in the specific intersection form in the initial path; and a measurement path setting step of setting the converted path derived at the converted-path derivation step to a measurement path.

The present invention further provides a computer executable, image measuring program for moving an imaging means relative to a measurement stage that supports an object to be measured and taking in instantaneous image information about the object at any of a plurality of measurement locations, thereby performing image measuring. The program comprises a measurement point acquisition step of acquiring measurement points; a first measurement point determination step of determining a first measurement point for beginning a measurement among the measurement points acquired; a second measurement point determination step of determining a second measurement point to be measured next to the first measurement point; a first estimation calculation step of calculating a first estimation on the basis of a distance between last two measurement points of order-determined measurement points having measurement orders already determined, a distancebetween ameasurement point having the last measurement order of the order-determined measurement points and a next candidate measurement point or a next measurement point candidate of order-undetermined measurement points having no measurement orders determined, and a bent angle specified between two segments connecting the last two measurement points of the order-determined measurement points to the next candidate measurement point in the measurement order; a next measurement point determination step of determining a next measurement point of next candidate measurement points on the basis of first estimations calculated using the order-undetermined measurement points as such next candidate measurement points; an initial path derivation step of deriving an initial path that passes through all measurement points from the first measurement point via every measurement point sequentially on the basis of a determination resulted from the first measurement point determination step, a determination resulted from the second measurement point determination step, and a determination resulted from the next measurement point determination step; an intersection-dissolution decision step of deciding, when there is a location of intersection in a specific intersection form on a path intersecting location in the initial path, whether the intersection is to be dissolved or retained on the basis of a second estimation calculated based on distances between measurement points before and after paths that form the intersection and bent angles between the paths at the measurement points, and a third estimation calculated based on distances between measurement points before and after paths newly connected if the intersection is dissolved and bent angles between the paths at the measurement points; a converted-path derivation step of converting the paths in the initial path in accordance with a decision resulted from the intersection-dissolution decision step to derive a converted path that dissolves the location of intersection in the specific intersection form in the initial path; and a measurement path setting step of setting the converted path derived at the converted-path derivation step to a measurement path.

### BRIEF DESCRIPTION OF THE DRAWINGS

Fig. 1 is an external perspective view illustrative of a configuration of an image measuring system according to an embodiment of the invention.
Fig. 2 is a functional block diagram of a computer in the measuring system.
Fig. 3 is a flowchart illustrative of a procedure of setting a measurement path in the measuring system.
Fig. 4 shows part of measuring operation in the system.
Fig. 5 shows part of measuring operation in the system.
Fig. 6 shows part of measuring operation in the system.
Fig. 7 shows an example of setting a measurement path.
Fig. 8 exemplifies a formula for calculating a first estimation in the system.
Fig. 9 shows part of measuring operation in the system.
Fig. 10 exemplifies a formula for calculating a second estimation and a formula for calculating a third estimation in the system.
Fig. 11 exemplifies a path topology containing a location of intersection in a specific intersection form.
Fig. 12 exemplifies a path topology after the intersection at the location of intersection in the specific intersection form is dissolved.
Fig. 13 shows part of measuring operation in the system.
Fig. 14 illustrates a measurement in a standard stop mode.
Fig. 15 illustrates a measurement in a nonstop measurement mode.
Fig. 16 shows part of measuring operation in the system.
Fig. 17 shows part of measuring operation in the system.

### DETAILED DESCRIPTION OF THE EMBODIMENTS

The embodiment of the present invention will now be described below with reference to the drawings.

### [System Configuration]

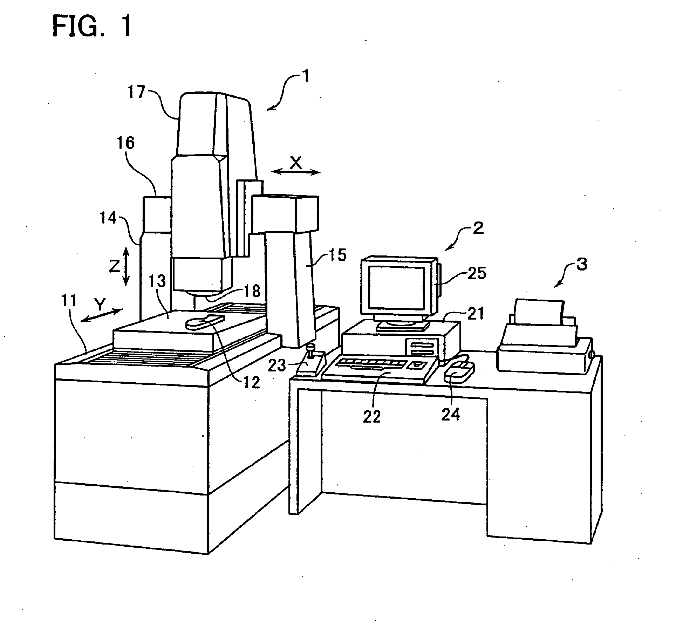

Fig. 1 is a perspective view illustrative of the entire configuration of an image measuring system according to an embodiment of the invention. The system comprises an image measuring machine 1 of the non-contact type, a computer system 2 operative to drive control the image measuring machine 1 and execute required data processing, and a printer 3 operative to print out measurement results.

The image measuring machine 1 includes a holder 11 on which a measurement stage 13 is equipped to receive a work 12 mounted thereon. The measurement stage 13 is driven in the Y-axis direction by a Y-axis drive mechanism, not shown. At the central portion between both side edges of the holder 11 are fixed support arms 14, 15 extending upward. An X-axis guide 16 is fixed to link both upper ends of the support arms 14, 15. The X-axis guide 16 supports an imaging unit 17 thereon. The imaging unit 17 is driven along the X-axis guide 16 by anX-axis drive mechanism, not shown. The imaging unit 17 has a lower end portion equipped with a CCD camera 18 as opposing the measurement stage 13. The imaging unit 17 contains an illuminator and a focusing mechanism as well as a Z-axis drive mechanism, not shown, operative to move the position of the CCD camera 18 in the Z-axis.

The computer system 2 comprises a computer body 21, a keyboard 22, a joystick box (hereinafter referred to as J/S) 23, a mouse 24 and a CRT 25. The computer body 21 may realize functions shown in Fig. 2 together with certain programs stored inside.

It includes a stage movement processor 31 operative to control the image measuring machine 1 based on instruction inputs from input means such as the keyboard 22, the J/S 23 and the mouse 24; an illumination adjuster 32; and an other measurement condition adjuster 33. Based on a stage movement instruction input from the input means, the stage movement processor 31 controls an XYZ axes drive mechanism for the image measuring machine 1 to shift the position of the CCD camera 18 relative to the measurement stage 13. The illumination adjuster 32, on teaching, drives the illuminator for the image measuring machine 1 to emit strobe light continuously at a certain period and adjusts the pulse width of the strobe light based on an illumination adjusting instruction input. In a nonstop measurement mode, it drives the illuminator to emit strobe light with a preset pulse width at designated measurement locations. Based on other measurement condition adjusting instruction inputs, the other measurement condition adjuster 33 adjusts other measurement conditions such as lens power and focusing adjustment.

The information about the stage position and the pulse width of strobe light and the other measurement condition information adjusted at the processors 31-33 are taken in by a parameter acquire 34 based on certain instruction inputs from the input means. The parameter taken in by the parameter acquire 34 is stored in a parameter storage unit 35. A part program generator 36 generates a part program for measurement using the parameter stored in the parameter storage unit 35. The generated part program is stored in a part program storage unit 37.

The part program generator 36 mainly includes a first measurement point determiner 361, a second measurement point determiner 362, an initial path deriver 363, an intersection-dissolution decider 364, and a converted-path deriver 365.

The first measurement point determiner 361 is configured to extract every measurement point to be measured from parameters stored in the parameter storage unit 35 and determine a first measurement point for beginning a measurement among the extracted measurement points. The first measurement point may be determined as a measurement point arbitrarily selected under a previously determined condition for determining the first measurement point. Alternately, it may be determined as a measurement point that satisfies a certain positional condition among the measurement points to be measured (such as a measurement point having the largest coordinate value in the X-axis direction and a measurement point having the largest coordinate value in the Y-axis direction).

The second measurement point determiner 362 is configured to determine a second measurement point to be measured next to the first measurement point among the measurement points to be measured other than the first measurement point. The second measurement point may be determined as a measurement point having the shortest distance from the first measurement point under a previously determined condition for determining the second measurement point.

The initial path deriver 363 includes a first estimation calculator operative to calculate a first estimation on the basis of distances between three points including two measurement points having last two measurement orders among measurement points having measurement orders already determined and one measurement point among measurement points having no measurement orders determined and a bent angle at each measurement point between straight lines connecting the three points. With respect to two measurement points having last two measurement orders, the first estimation calculator calculates first estimations respectively for measurement points having no measurement orders determined.

The initial path deriver 363 includes a next measurement point determiner operative to compare among the first estimations calculated respectively for measurement points having no measurement orders determined and determine a measurement point to be measured next in accordance with the compared result. The next measurement point determiner determines as the measurement point to be measured next a measurement point having the smallest first estimation as a result of comparison of the first estimations.

The initial path deriver 363 repeats the determination processes by the first estimation calculator and the next measurement point determiner for the measurement point to be measured next to determine measurement orders of measurement points sequentially. The initial path deriver 363 repeats the determination processes by the first estimation calculator and the next measurement point determiner until measurement points having no measurement orders determined run out to derive an initial path that passes through all measurement points from the first measurement point via every measurement point sequentially.

The intersection-dissolution decider 364 includes a second estimation calculator operative to calculate a second estimation based on distances between measurement points before and after paths that form an intersection between paths in an initial path and bent angles between the paths at the measurement points. It also includes a third estimation calculator operative to calculate a third estimation based on distances between measurement points before and after paths newly connected if the intersection is dissolved and bent angles at the measurement points.

On the basis of the second and third estimations, the intersection-dissolution decider 364 decides whether the intersection is to be dissolved or retained. Specifically, the intersection-dissolution decider 364 makes a decision to dissolve the intersection if the calculated second estimation is larger than the calculated third estimation. It also makes a decision to retain the intersection if the calculated second estimation is not larger than the calculated third estimation.

The converted-path deriver 365 is configured to derive a converted path from the initial path to dissolve part or the entire of the intersection between the paths in the initial path in accordance with a decision resulted from the intersection-dissolution decider 364.

A measurement path setter 366 is configured to set the converted path derived at the converted-path deriver 365 to a measurement path.

A part program executor 38 reads a required part program out of the part program storage unit 37 and executes it. The part program executor appropriately drives the stage movement processor 31, the illumination adjuster 32, the other measurement condition adjuster 33 and an image acquirer 43 in accordance with various commands described in the part program. The image information captured by the CCD camera 18 is sequentially stored in an image storage unit 41. The image information stored in the image storage unit 41 is sequentially displayed on a display unit 25 and captured as still images at the image acquirer 42 based on the part program. An image processor 43 executes image processing for image measurement, such as measuring tool setting, edge detection, and coordinate detection to the image information acquired at the image acquirer 42.

### [Procedure of Setting Measurement Path]

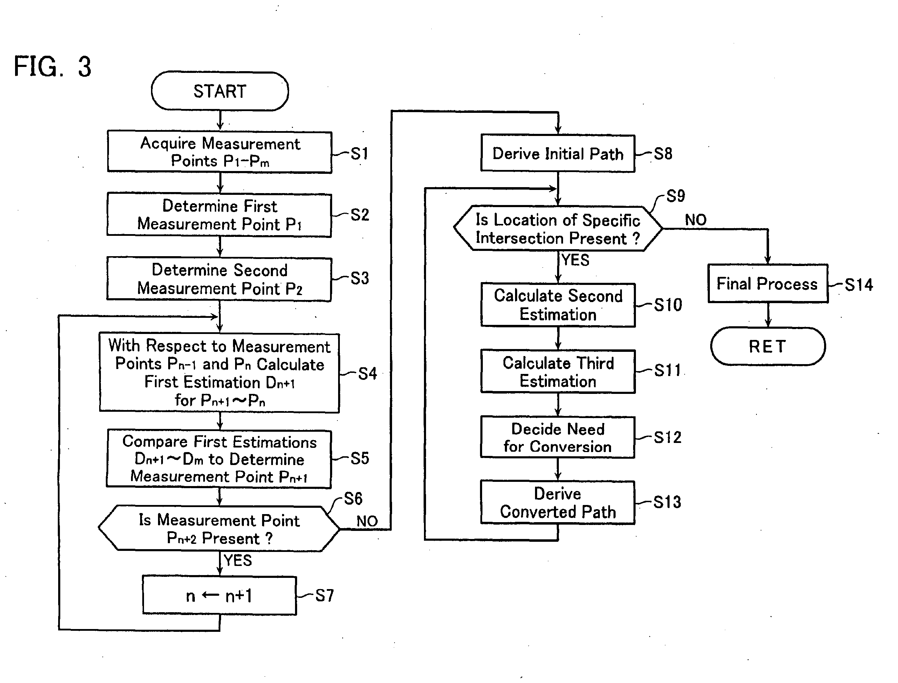

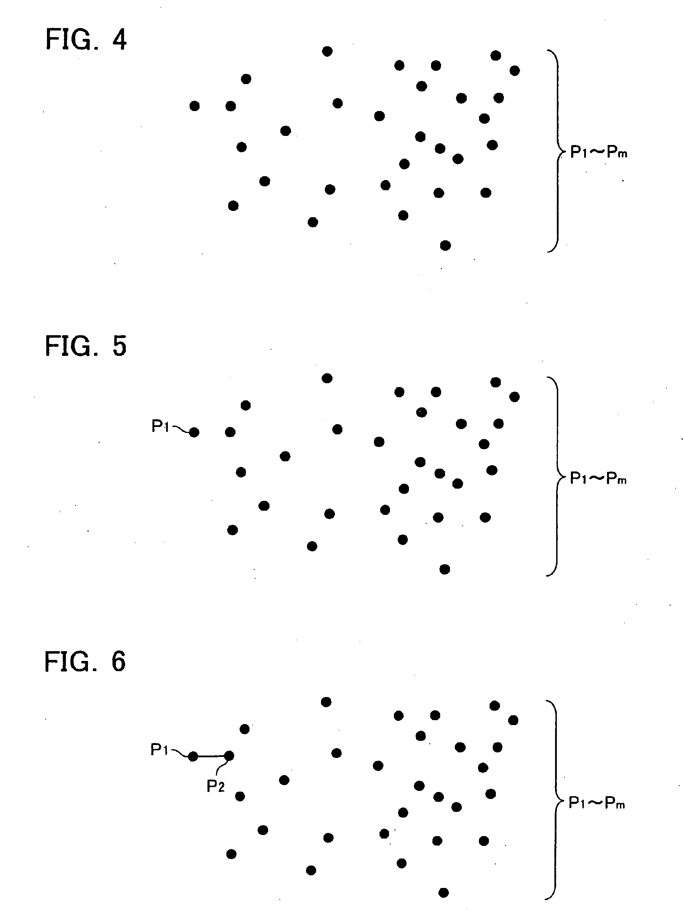

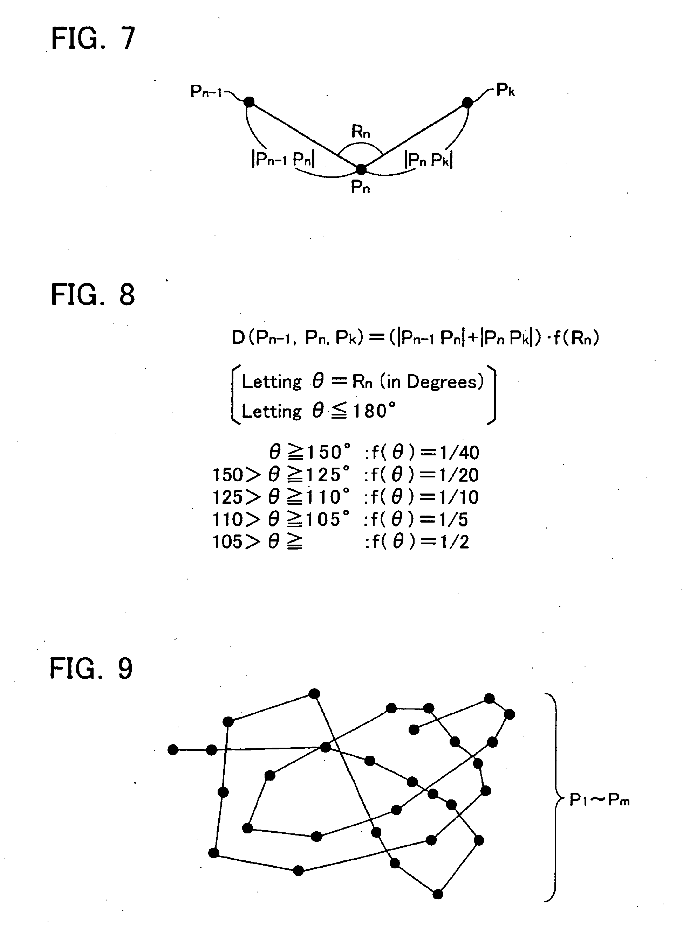

With reference to a flowchart of Fig. 3 and appropriately to Figs. 4-13, a procedure of setting a measurement path in the image measuring system thus configured according to the present embodiment is described. The measurement path setting may be processed during generation of the part program in offline teaching. Figs. 4-6, 9 and 13 are schematic views representative of a method of determining measurement points. Fig. 7 is a view representative of a method of determining a measurement path from a measurement point Pₙ to a measurement point Pₙ₊₁.

First, as shown in Fig. 4, the parameter acquirer 34 acquires parameters to determine measurement points P₁-Pₘ (step S1). The parameters include information that can specify the measurement points.

Next, the first measurement point determiner 361 determines a first measurement point P₁ to be measured first among the measurement points P₁-Pₘ as shown in Fig. 5 (step S2). It is assumed herein that the first measurement point P₁ is a measurement point selected as having the smallest X-axis coordinate among the measurement points P₁-Pₘ.

Subsequently, the second measurement point determiner 351 determines a second measurement point P₂ to be measured next to the first measurement point P₁ of the measurement points P₂-Pₘ other than the first measurement point P₁ among the measurement points P₁-Pₘ as shown in Fig. 6 (step S3). It is assumed herein that the second measurement point P₂₋₁ is a measurement point selected as located at the shortest distance from the first measurement point P₁ among the measurement points P₁-Pₘ.

Next, with respect to the last two measurement points Pₙ₋₁ and Pₙ (n = 2, 3, ... , m) of the measurement points P₁-Pₙ having measurement orders already determined, the first estimation calculator in the initial path deriver 363 calculates first estimations Dₙ₊₁-Dₘ (n = 2, 3, ... , m) for the measurement points Pₙ₊₁-Pₘ having no measurement orders determined (step S4).

At step S4, for example as shown in Fig. 7, the first estimation calculator calculates first estimations D (Pₙ₊₁, Pₙ, Pₖ) on the basis of distances |Pₙ₋₁Pₙ| and |PₙPₖ| between three points including two measurement points Pₙ₋₁ and Pₙ(n = 2, 3, ..., m) and one measurement point Pₖ (k = n+1, n+2, ..., m) of the measurement points Pₙ₊₁-Pₘ having no measurement orders determined and a bent angle Rₙ at a measurement point between straight lines connecting the three points in the measurement order (a bent angle below 180° at the measurement point Pₙ).

Specifically, the first estimation calculator employs an expression shown in Fig. 8, for example, to calculate first estimations Dₖ = (D (Pₙ₊₁, Pₙ, Pₖ)) for the measurement points Pₖ (Pₙ₊₁-Pₘ) having no measurement orders determined.

When the expression shown in Fig. 8 is used, the first estimation decreases as the bent angle specified between two segments connecting the last two measurement points of the determined measurement points to the next measurement point candidate in the measurement order approaches 180º. The first estimation also decreases as the sum of the distance between the last two measurement points of the determined measurement points and the distance between the last measurement point of the determined measurement points and the next measurement point candidate becomes smaller.

An expression other than the expression shown in Fig. 8 may be used if it reduces the derived value as the bent angle specified between two segments connecting the last two measurement points of the determined measurement points to the next measurement point candidate in the measurement order approaches 180º. Also in this case, such an expression may be used that is independent of the distance between the last two measurement points of the determined measurement points and the distance between the last measurement point of the determined measurement points and the next measurement point candidate and is dependent only on variations in bent angle.

The estimations may be used to determine a next measurement point among those having a bent angle that is specified between two segments connecting the last two measurement points of the determined measurement points to the next measurement point candidate in the measurement order and falls within a certain angular range (such as 105º-180º). In such the case, such an expression may be used that reduces the derived value as the sum of the distance between the last two measurement points of the determined measurement points and the distance between the last measurement point of the determined measurement points and the next measurement point candidate becomes smaller. In this case, the distance between the last two measurement points of the determined measurement points is a constant. Accordingly, such an expression may be used that reduces the derived value as the distance between the last measurement point of the determined measurement points and the next measurement point candidate becomes smaller.

Then, the next measurement point determiner in the initial path deriver 363 compares among the first estimations Dₙ₊₁-Dₘ (n = 2, 3, ..., m) calculated for measurement points Pₖ having no measurement orders determined and determines the measurement point Pₖ having the smallest value of the first estimation as a measurement point Pₙ₊₁ to be measured next (step S5).

Subsequently, the initial path deriver 363 determines whether a measurement point Pₙ₊₂ located two points posterior to the measurement point Pₙ (one point posterior to the measurement point Pₙ₊₁) is present (step S6). If the measurement point Pₙ₊₂ is present (step S6, YES), the object is shifted from the measurement point Pₙ to the measurement point Pₙ₊₁ located one point posterior (step S7), and the control repeatedly executes the processes in steps S4-S6. Repeatedly executing steps S4-S7 sequentially determines measurement orders of the measurement points, which lead to derivation of the initial path as shown in Fig. 9 that passes through all measurement points from the first measurement point via every measurement point (step S8).

Repeatedly executing steps S4-S7 until the measurement point Pₙ₊₂ is not present (step S6, NO) allows derivation of the initial path (step S8).

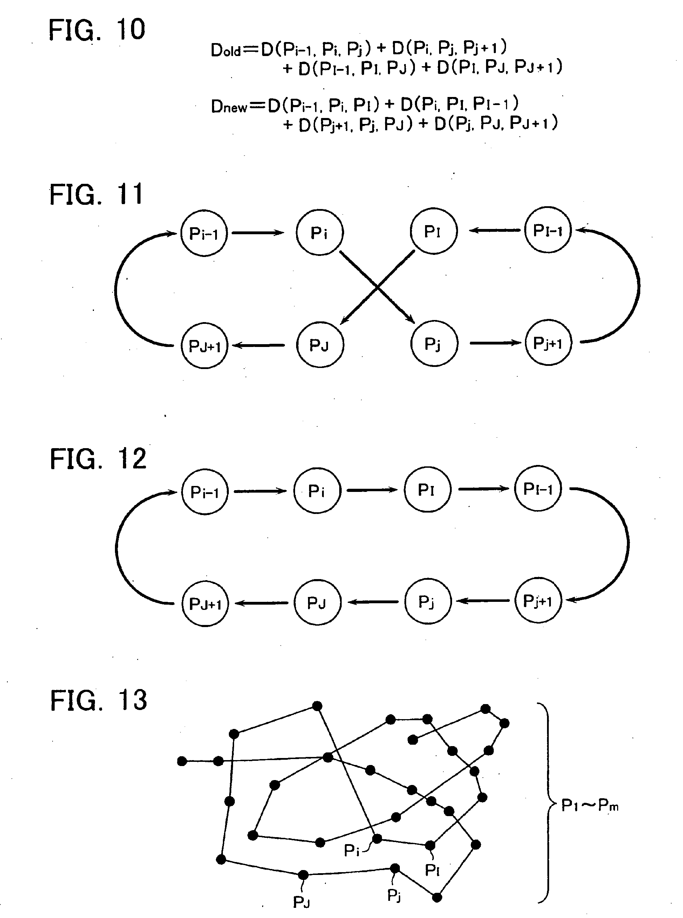

Next, the intersection-dissolution decider 364 examines whether or not there is a location of intersection in a specific intersection topology in the initial path (step S9). The location of intersection in the specific intersection form in this example is a location of intersection on an 8-shaped path (see Fig. 11).

If there is a location of intersection in the specific intersection form, the second estimation calculator in the intersection-dissolution decider 364 calculates a second estimation D_{old} based on distances between measurement points before and after paths that form the intersection and bent angles between the paths at the measurement points (step S10). If there is a location of intersection shown in Fig. 11, the second estimation D_{old} can be represented by the sum of four first estimations for four points before and after the intersection, for example, as shown in Fig. 10.

Subsequently, the third estimation calculator in the intersection-dissolution decider 364 calculates a third estimation D_{new} based on distances between measurement points before and after paths newly connected if the intersection is dissolved and bent angles between the paths at the measurement points (step S11). The third estimation D_{new} can be represented by the sum of four first estimations for four points before and after the segments that are subjected to path change if the intersection is dissolved, for example, as shown in Fig. 10.

The intersection-dissolution decider 364 compares the calculated second estimation D_{old} with the calculated third estimation D_{new} to determine whether the intersection is to be dissolved or retained (step S12). Specifically, if the calculated second estimation D_{old} is larger than the calculated third estimation D_{new}, the intersection-dissolution decider 364 makes a decision to dissolve the intersection because the bent on the path can be made smoother. If the calculated second estimation D_{old} is not larger than the calculated third estimation D_{new}, it makes a decision to retain the intersection because the bent on the path is smoother in the current state than others.

If the intersection-dissolution decider 364 makes the decision to dissolve the intersection, the converted-path deriver 365 derives a converted-path from the initial path to dissolve the intersection between the paths in the initial path (step S13). If the intersection-dissolution decider 364 makes a decision not to dissolve the intersection, the paths are not converted and the control returns to step S9.

Steps 9-13 are repeatedly executed until all locations of intersection in the specific intersection form are studied and the paths are converted in accordance with the studied result.

Then, a final process is executed (step S14) to terminate the present flow. The final process is herein a process executed by the measurement path setter 366 for setting the converted-path derived at the converted-path deriver 365 (the initial path if there is no location of converted intersection) to the measurement path.

Thus, the present embodiment makes it possible to derive an initial path having a bent angle that is not acute at each measurement point based on the first estimation. In addition, the embodiment makes it possible to dissolve locations of intersection in a specific intersection form to derive a converted path having a larger obtuse bent angle at each measurement point based on the second and third estimations. Therefore, the direction of movement of the movement mechanism for the imaging device can be varied smoothly. Accordingly, it is possible to suppress the decrease in the speed of movement of the movement mechanism, smoothly move the movement mechanism, and reduce the measurement time. As the direction of movement can be varied smoothly, it is possible to greatly reduce a sharp angular variation imposed on the imaging device, maintain the speed of movement as constant as possible, execute fast measurements, and further reduce the measurement time.

## Claims

1. An image measuring system for moving an imaging means (17) relative to a measurement stage (13) that supports an object (12) to be measured and taking in instantaneous image information about the object (12) at any of a plurality of measurement locations, thereby performing image measuring, the system comprising:
a measurement point acquirer (34) operative to acquire measurement points (P₁-Pₘ);
a first measurement point determiner (361) operative to determine a first measurement point (P₁) for beginning a measurement among the measurement points (P₁-Pₘ) acquired by the measurement point acquirer (34); and
a second measurement point determiner (362) operative to determine a second measurement point (P₂) to be measured next to the first measurement point (P₁);
**characterized by further comprising:**
a first estimation calculator (363) operative to calculate a first estimation (D) on the basis of a distance between last two measurement points (Pₙ₋₁, Pₙ) of order-determined measurement points (P₁-Pₙ) having measurement orders already determined, on the basis of a distance between a measurement point (Pₙ) having the last measurement order of the order-determined measurement points (P₁-Pₙ) and a next candidate measurement point (Pₖ) or a next measurement point (Pₖ) candidate of order-undetermined measurement points (Pₙ₊₁-Pₘ) having no measurement orders determined, and on the basis of a bent angle (Rₙ) specified between two segments connecting the last two measurement points (Pₙ₋₁-,Pₙ) of the order-determined measurement points (P₁-Pₙ) to the next candidate measurement point (Pₖ) in the measurement order;
a next measurement point determiner (363) operative to determine a next measurement point (Pₖ) of next candidate measurement points (Pₙ₊₁-Pₘ) on the basis of first estimations (D) calculated by the first estimation calculator (363) using the order-undetermined measurement points as such next candidate measurement points;
an initial path deriver (363) operative to derive an initial path that passes through all measurement points (P₁-Pₘ) from the first measurement point via every measurement point sequentially on the basis of a determination resulted from the first measurement point determiner (361), a determination resulted from the second measurement point determiner (362), and a determination resulted from the next measurement point determiner (363); an intersection-dissolution decider (364) operative to decide, when there is a specific intersection topology in the initial path, whether the intersection is to be dissolved or retained on the basis of a second estimation (D_{old}) calculated based on distances between measurement points (Pi-1, Pi, Pj, Pj+1, PI-1, PI, PJ, PJ+1) along the initial path and located before and after the intersection on the initial path and bent angles between segments connecting measurement points (Pi, Pj, PI, PJ) located before and after the intersection and segments (Pi-1-Pi, Pj-Pj+1, PI-1-PI, PJ-PJ+1) connected to both sides of the segments (Pi-Pj, PI-PJ) forming the intersection, and a third estimation (D_{new}) calculated based on distances between the measurement points (Pi-1, Pi, PI, PI-1, Pj+1, Pj, PJ, PJ+1) used in the second estimation along a newly path with changed connections of the measurement points located before and after the intersection so as to dissolve the intersection and bent angles between segments connecting the measurement points (Pi, Pj, PI, PJ) used in the second estimation along the newly path; a converted-path deriver (365) operative to convert the paths in the initial path in accordance with a decision resulted from the intersection-dissolution decider (364) to derive a converted path that dissolves the specific intersection topology in the initial path; and
a measurement path setter (366) operative to set the converted path derived at the converted-path deriver (365) to a measurement path.

2. The image measuring system according to claim 1, wherein as the bent angle specified between two segments connecting the last two measurement points (Pₙ₋₁-,Pₙ) of the order-determined measurement points (P₁-Pₙ) to the next candidate measurement point (Pₖ) in the measurement order approaches 180°, the first estimation (D) decreases, wherein the smaller the sum of the distance between the last two measurement points (Pₙ₋₁-,Pₙ) of the order-determined measurement points (P₁-Pₙ) and the distance between the measurement point having the last measurement order of the order-determined measurement points (P₁-Pₙ) and the next candidate measurement point (Pₖ), the smaller the first estimation (D) becomes,
wherein the next measurement point determiner (363) determines as the next measurement point the next candidate measurement point (Pₖ) having the smallest first estimation (D) of the first estimations (D) calculated by the first estimation calculator (363).

3. The image measuring system according to claim 1 or 2, wherein as bent angles between segments connecting measurement points located before and after the intersection and segments connected to both sides of the segments forming the intersection approach 180°, the second and third estimations (D_{new})decrease, wherein the smaller the distance between the measurement points, the smaller the second and third estimations (D_{old}, D_{new}) become,
wherein the intersection-dissolution decider (364) makes a decision to dissolve the intersection when the calculated third estimation (D_{new}) is smaller than the calculated second estimation (D_{old}).

4. The image measuring system according to any one of claims 1-3, wherein the specific intersection topology is a location of 8-shaped intersection.

5. An image measuring method for moving an imaging means relative to a measurement stage that supports an object to be measured and taking in instantaneous image information about the object at any of a plurality of measurement locations, thereby performing image measuring, the method comprising:
a measurement point acquisition step of acquiring measurement points(P₁-Pₘ);
a first measurement point determination step of determining a first measurement point (P₁) for beginning a measurement (P₁) among the measurement points (P₁-Pₘ) acquired;
a second measurement point determination step of determining a second measurement point (P₂) to be measured next to the first measurement point(P₁);
**characterized by**
a first estimation calculation step of calculating a first estimation (P₁) on the basis of a distance between last two measurement points of order-determined measurement points (P₁-Pₙ) having measurement orders already determined on the basis of a distance between a measurement point (Pₙ) having the last measurement order of the order-determined measurement points (P₁-Pₙ) and a next candidate measurement point (Pₖ) or a next measurement point candidate of order-undetermined measurement points (Pₙ₊₁-Pₘ) having no measurement orders determined, and on the basis of a bent angle (Rₙ) specified between two segments connecting the last two measurement points (Pₙ₋₁-,Pₘ) of the order-determined measurement points (P₁-Pₘ) to the next candidate measurement point (Pₖ) in the measurement order;
a next measurement point determination step of determining a next measurement point (Pₙ) of next candidate measurement points (Pₙ₊₁-Pₙ) on the basis of first estimations (D) calculated using the order-undetermined measurement points as such next candidate measurement points;
an initial path derivation step of deriving an initial path that passes through all measurement points (P₁-Pₘ) from the first measurement point via every measurement point sequentially on the basis of a determination resulted from the first measurement point determination step, a determination resulted from the second measurement point determination step, and a determination resulted from the next measurement point determination step;
an intersection-dissolution decision step of deciding, when there is a specific intersection topology in the initial path, whether the intersection is to be dissolved or retained on the basis of a second estimation calculated based on distances between measurement points (Pi-1, Pi, Pj, Pj+1, PI-1, PI, PJ, PJ+1) along the initial path and located before and after the intersection on the initial path and bent angles between segments connecting measurement points (Pi, Pj, PI, PJ) located before and after the intersection and segments (Pi-1-Pi, Pj-Pj+1, PI-1-PI, PJ-PJ+1) connected to both sides of the segments (Pi-Pj, PI-PJ) forming the intersection, and a third estimation (D_{new}) calculated based on distances between the measurement points (Pi-1, Pi, PI, PI-1, Pj+1, Pj, PJ, PJ+1) used in the second estimation along a newly path with changed connections of the measurement points located before and after the intersection so as to dissolve the intersection and bent angles between segments connecting the measurement points (Pi, Pj, PI, PJ) used in the second estimation along the newly path;
a converted-path derivation step of converting the paths in the initial path in accordance with a decision resulted from the intersection-dissolution decision step to derive a converted path that dissolves the specific intersection topology in the initial path; and a measurement path setting step of setting the converted path derived at the converted-path derivation step to a measurement path.

6. The image measuring method according to claim 5, wherein as the bent angle specified between two segments connecting the last two measurement points of the order-determined measurement points to the next candidate measurement point in the measurement order approaches 180°, the first estimation decreases, wherein the smaller the sum of the distance between the last two measurement points of the order-determined measurement points and the distance between the measurement point having the last measurement order of the order-determined measurement points and the next candidate measurement point, the smaller the first estimation becomes,
wherein the next measurement point determination step includes determining as the next measurement point the next candidate measurement point having the smallest first estimation of the first estimations calculated in the first estimation calculation step.

7. The image measuring method according to claim 5 or 6, wherein as bent angles between segments connecting measurement points located before and after the intersection and segments connected to both sides of the segments forming the intersection approach 180°, the second and third estimations decrease, wherein the smaller the distance (D_{new}) between the measurement points, the smaller the second and third estimations (D_{old},D_{new}) become,
wherein the intersection-dissolution decision step includes making a decision to dissolve the intersection when the calculated third estimation (D_{new}) is smaller than the calculated second estimation (D_{old}).

8. The image measuring method according to any one of claims 5-7, wherein the specific intersection topology is a location of 8-shaped intersection.

9. A computer executable, image measuring program for moving an imaging means relative to a measurement stage that supports an object to be measured and taking in instantaneous image information about the object at any of a plurality of measurement locations, thereby performing image measuring, the program comprising:
a measurement point acquisition step of acquiring measurement points (P₁-Pₘ);
a first measurement point determination step of determining a first measurement point (P₁) for beginning a measurement among the measurement points acquired;
a second measurement point determination step of determining a second measurement point (P₂) to be measured next to the first measurement point (P₁);
**characterized by**
a first estimation calculation step of calculating a first estimation on the basis of a distance between last two measurement points of order-determined measurement points (P₁-Pₙ) having measurement orders already determined on the basis of a distance between a measurement point (Pₙ) having the last measurement order of the order-determined measurement points (P₁-Pₙ) and a next candidate measurement point or a next measurement point candidate of order-undetermined measurement points (Pₙ₊₁-Pₙ) having no measurement orders determined, and on the basis of a bent angle specified between two segments connecting the last two measurement points (Pₙₕ₋₁,Pₘ) of the order-determined measurement points (P₁-Pₙ) to the next candidate measurement point (Pₖ) in the measurement order;
a next measurement point determination step of determining a next measurement point of next candidate measurement points on the basis of first estimations (D) calculated using the order-undetermined measurement points as such next candidate measurement points;
an initial path derivation step of deriving an initial path that passes through all measurement points (P₁-Pₘ) from the first measurement point via every measurement point sequentially on the basis of a determination resulted from the first measurement point determination step, a determination resulted from the second measurement point determination step, and a determination resulted from the next measurement point determination step; an intersection-dissolution decision step of deciding, when there is a specific intersection topology in the initial path, whether the intersection is to be dissolved or retained on the basis of a second estimation calculated based on distances between measurement points (Pi-1, Pi, Pj, Pj+1, PI-1, PI, PJ, PJ+1) along the initial path and located before and after the intersection on the initial path and bent angles between segments connecting measurement points (Pi, Pj, PI, PJ) located before and after the intersection and segments (Pi-1-Pi, Pj-Pj+1, PI-1-PI, PJ-PJ+1) connected to both sides of the segments (Pi-Pj, PI-PJ) forming the intersection, and a third estimation calculated based on distances between measurement points on (Pi-1, Pi, Pj, Pj+1, PI-1, PI, PJ, PJ+1) used in the second estimation along a newly path with changed connections of the measurement points located before and after the intersection so as to dissolve the intersection and bent angles between segments connecting the measurement points (Pi, Pj, PI, PJ) used in the second estimation along the newly path; a converted-path derivation step of converting the paths in the initial path in accordance with a decision resulted from the intersection-dissolution decision step to derive a converted path that dissolves the specific intersection topology in the initial path; and a measurement path setting step of setting the converted path derived at the converted-path derivation step to a measurement path.

10. The image measuring program according to claim 9, wherein as the bent angle specified between two-segments connecting the last two measurement points of the order-determined measurement points to the next candidate measurement point in the measurement order approaches 180°, the first estimation decreases, wherein the smaller the sum of the distance between the last two measurement points of the order-determined measurement points and the distance between the measurement point having the last measurement order of the order-determined measurement points and the next candidate measurement point, the smaller the first estimation becomes,
wherein the next measurement point determination step includes determining as the next measurement point the next candidate measurement point having the smallest first estimation of the first estimations calculated in the first estimation calculation step.

11. The image measuring program according to claim 9 or 10, wherein as bent angles between segments connecting measureme points located before and after the intersection and segments connected to both sides of the segments forming the intersection approach 180°, the second and third estimations decrease, wherein the smaller the distance (D_{new}) between the measurement points, the smaller the second and third estimations (D_{old},D_{new}) become,
wherein the intersection-dissolution decision step includes making a decision to dissolve the intersection when the calculated third estimation (D_{new}) is smaller than the calculated second estimation (D_{old}).

12. The image measuring program according to any one of claims 9-11, wherein the specific intersection topology is a location of 8-shaped intersection

## Patentansprüche

1. Ein Bildmesssystem zum Bewegen eines Bildgebungsmittels (17) in Bezug auf einen Messtisch (13) welcher ein Objekt (12) aufnimmt, welches gemessen werden soll, und zum Aufnehmen einer momentanen Bildinformation über das Objekt (12) bei jedem von einer Vielzahl von Messorten, wobei dadurch eine Bildmessung ausgeführt wird, wobei das System umfasst:
einen Messpunktaufnehmer (34), welcher betriebsbereit ist, um Messpunkte (P₁-Pₘ) aufzunehmen;
einen ersten Messpunktbestimmer (361), geeignet, um einen ersten Messpunkt (P₁) zum Beginn einer Messung aus den Messpunkten (P₁-Pₘ) zu bestimmen, welche durch den Messpunktaufnehmer (34) aufgenommen wurden; und
einen zweiten Messpunktbestimmer (362), geeignet, um einen zweiten Messpunkt (P₂), welcher nach dem ersten Messpunkt (P₁) gemessen werden soll, zu bestimmen;
**dadurch gekennzeichnet, dass es des weiteren umfasst:**
einen ersten Schätzungsberechner (363), geeignet, um eine erste Schätzung (D) auf der Grundlage eines Abstands zwischen den letzten zwei Messpunkten (Pₙ₋₁, Pₙ) der rangfolgebestimmten Messpunkte (P₁-Pₙ) zu bestimmen, wobei eine Messrangfolge schon bestimmt wurde, auf der Grundlage eines Abstands zwischen einem Messpunkt (Pₙ), welcher die letzte Messreihenfolge der reihenfolgebestimmten Messpunkte (P₁-Pₙ) und einen nächsten Kandidatenmesspunkt (Pₖ) oder einen nächsten Messpunkt (Pₖ) von rangfolgeunbestimmten Messpunkten (Pₙ₊₁-Pₘ), von denen keine Messreihe bestimmt ist, und auf der Grundlage eines angewinkelten Winkels (Rₙ), der zwischen zwei Segmenten angegeben ist, wobei die zwei letzten Messpunkte (Pₙ₋₁-, Pₙ) der reihenfolgebestimmten Messpunkte (P₁-Pₙ) zu dem nächsten Kandidatenmesspunkt (Pₖ) in der Messrangfolge verbinden;
einen nächsten Messpunktbestimmer (363), geeignet, um einen nächsten Messpunkt (Pₖ) eines nächsten Kandidatenmesspunkts (Pₙ₊₁-Pₘ) auf der Grundlage der ersten Schätzungen (D), welche durch den ersten Schätzungsrechner (363) berechnet wurden, zu bestimmen, wobei die rangfolgeunbestimmten Messpunkte als solche nächsten Kandidatenmesspunkte benutzt werden;
einen Ursprungspfadableiter (363), geeignet, um einen Ursprungspfad abzuleiten, welcher durch alle Messpunkte (P₁-Pₘ) vom ersten Messpunkt über jeden Messpunkt sequentiell auf der Grundlage einer Bestimmung geht, welche vom ersten Messpunktbestimmer (361) resultiert, einer Bestimmung, welche vom zweiten Messpunktbestimmer (362) resultiert, und einer Bestimmung, welche von dem nächsten Messpunktbestimmer (363) resultiert;
einen Schnittpunktentflechterentscheider (364), geeignet, um zu entscheiden, wann es eine spezifische Schnittpunktstopologie in dem ursprünglichen Pfad gibt, ob der Schnittpunkt entflechtet werden muss oder auf der Grundlage einer zweiten Schätzung (D_{old}) beibehalten werden muss, welche auf Grundlage von Abständen zwischen Messpunkten (Pi-1, Pi, Pj, Pj+1; PI-1, PI, PJ, PJ+1) entlang des Ursprungspfads berechnet wird und vor und hinter dem Schnittpunkt auf dem Ursprungspfad liegt und abgewinkelte Winkel zwischen Segmenten, welche Messpunkte (Pi, Pj, PI, PJ) verbinden, die vor und nach dem Schnittpunkt und Segmenten (Pi-1Pi, Pj-Pj+1; PI-1-PI, PJ-PJ+1) liegen, die mit beiden Seiten der Abschnitte Pi-Pj, PI-PJ) verbunden sind, wobei sie den Schnittpunkt bilden,
und eine dritte Schätzung (D_{new}), welche auf Grundlage von Abständen zwischen den Messpunkten (Pi-1, Pi, PI, PI-1, Pj+1, Pj, PJ, PJ+1) berechnet werden, welche in der zweiten Schätzung entlang eines neuen Pfades mit geänderten Verbindungen der Messpunkte, die vor und nach dem Schnittpunkt liegen, benutzt werden, um den Schnittpunkt und angewinkelte Winkel zwischen Abschnitten, die die Messpunkte (Pi, Pj, PI, PJ) verbinden, zu entflechten, welche in der zweiten Schätzung entlang des neuen Pfades benutzt werden;
einen veränderten Pfadableiter (365), geeignet, um die Pfade in den ursprünglichen Pfad in Übereinstimmung mit einer Entscheidung, welche aus dem Schnittpunktentflechtungsentscheider (364) resultiert, umzuwandeln, um einen veränderten Pfad abzuleiten, welcher die spezifische Schnittpunktstopologie in dem ursprünglichen Pfad entflechtet;
einen Messpfadeinricher (366), geeignet, um den geänderten Pfad einzurichten, welcher aus dem geänderten Pfadableiter 365 zu einem Messpfad abgeleitet wird.

2. Bildmesssystem nach Anspruch 1, wobei, wenn der angewinkelte Winkel, welcher von den zwei Abschnitten, die die zwei letzten Messpunkte (Pₙ₋₁, Pₙ) der rangfolgebestimmten Messpunkte (P₁-Pₙ) mit dem nächsten Kandidatenmesspunkt (Pₖ) verbinden, sich in der Messreihenfolge 180° annähert, die erste Schätzung (D) abnimmt, wobei, je kleiner die Summe der Abstände zwischen den zwei letzten Messpunkten (Pₙ-1,Pₙ) der rangfolgenbestimmten Messpunkte (P₁-Pₙ) und der Abstand zwischen dem Messpunkt, welcher die letzte Messreihenfolge der rangfolgenbestimmten Messpunkte (P₁-Pₙ) und dem nächsten Kandidatenmesspunkt (Pₖ) ist, um so kleiner wird die erste Schätzung (D), wobei der nächste Messpunktbestimmer (363) den nächsten Kandidatenmesspunkt (Pₖ), welcher die kleinste erste Schätzung (D) der ersten Schätzung (D), welche durch den ersten Schätzungsberechner (363) berechnet wurden, aufweist, als nächsten Messpunkt bestimmt.

3. Bildmesssystem nach Anspruch 1 oder 2, wobei, wenn abgewinkelte Winkel zwischen zwei Abschnitten, welche Messpunkte verbinden, welche vor und nach dem Schnittpunkt liegen, und Segmenten, welche mit beiden Seiten der Abschnitte, welche den Schnittpunkt bilden, verbunden sind, sich 180° annähern, die zweite und dritte Schätzung (D_{new}) abnimmt, wobei, je kleiner die Distanz zwischen den Messpunkten ist, desto kleiner die zweite und dritte Schätzung (D_{old}, D_{new}) werden,
wobei der Schnittpunktentflechterentscheider (365) eine Entscheidung macht, die Schnittpunkte zu entflechten, wenn die berechnete dritte Schätzung (D_{new}) kleiner ist als die berechnete zweite Schätzung (D_{old}).

4. Bildmesssystem nach einem der Ansprüche 1 - 3, wobei die spezifische Schnittpunktstopologie ein Ort des 8-förmigen Schnittpunkts ist.

5. Bildmessverfahren zum Bewegen eines Bildgebemittels in Bezug auf einen Messtisch, welcher ein Objekt, welches gemessen werden soll, aufnimmt, und zum Aufnehmen momentaner Bildinformation über das Objekt bei jedem der Vielzahl von Messorten, wobei dadurch eine Bildmessung ausgeführt wird, wobei das Verfahren umfasst:
Einen Messpunktaufnahmeschritt zum Aufnehmen von Messpunkten (P₁-Pₘ);
einen ersten Messpunktbestimmungsschritt zum Bestimmen eines ersten Messpunkts (P₁) zu Beginn einer Messung (P₁) zwischen den Messpunkten (P₁-Pₘ), welche aufgenommen werden;
einen zweiten Messpunktbestimmungsschritt zum Bestimmen eines zweiten Messpunkts (P₂), welcher als nächstes zu dem ersten Messpunkt (P₁) gemessen werden soll;
**gekennzeichnet durch:**
einen ersten Schätzberechnungsschritt des Berechnens einer ersten Schätzung (P₁) auf Grundlage eines Abstandes zwischen den zwei letzten Messpunkten der rangfolgebestimmten Messpunkte (P₁-Pₙ), welche Messreihen aufweisen, die schon auf Grundlage eines Abstands zwischen einem Messpunkt (Pₙ) bestimmt wurden, welcher den letzten Messrang der rangfolgebestimmten Messpunkte (P₁-Pₙ) aufweist und einen nächsten Kandidatenmesspunkt (Pₖ) oder einen nächsten Kandidatenmesspunkt der rangfolgenunbestimmten Messpunkte (Pₙ₊₁-Pₘ), welche keine Messrangfolgen, die bestimmt wurden, aufweisen und auf Grundlage von abgewinkelten Winkeln (Rₙ), welche zwischen zwei Segmenten definiert sind, die die zwei letzten Messpunkte (Pₙ₋₁, Pₙ) der rangfolgebestimmten Messpunkte (P₁-Pₘ) zu dem nächsten Kandidatenmesspunkt (Pₖ) in der Messreihenrangfolge verbinden;
einen nächster Messpunktbestimmungsschritt für das Bestimmen eines nächsten Messpunkts (Pₙ) der nächsten Kandidatenmesspunkte (Pₙ₊₁-Pₘ) auf Grundlage von ersten Schätzungen (D), welche berechnet wurden, indem die rangfolgenunbestimmten Messpunkte als solche nächsten Kandidatenmesspunkte benutzt werden;
einen ursprünglichen Pfadableitungsschritt für das Ableiten eines ursprünglichen Pfads, welcher **durch** alle Messpunkte (P₁-Pₘ) von dem ersten Messpunkt über jeden Messpunkt sequentiell auf Grundlage einer Bestimmung geht, welche von dem ersten Messpunktbestimmungsschritt resultiert, eine Bestimmung, welche von dem zweiten Messpunktbestimmungsschritt resultiert, und eine Bestimmung, welche von dem nächsten Messpunktbestimmungsschritt resultiert;
einen Schnittpunktentflechtungsentscheidungschritt zum Entscheiden, wann es eine bestimmte Schnittpunktstopologie in dem ursprünglichen Pfad gibt, ob der Schnittpunkt entflechtet oder beibehalten werden soll auf Grundlage einer zweiten Schätzung, welche auf Grundlage von Abständen zwischen den Messpunkten (Pi-1, Pi, Pj, Pj+1; PI-1, PI, PJ, PJ+1) entlang des ursprünglichen Pfads berechnet wird und vor und nach dem Schnittpunkt auf dem ursprünglichen Pfad liegt und angewinkelte Winkel zwischen den Segmenten, welche die Messpunkte (Pi, Pj, PI, PJ), welche sich vor und nach dem Schnittpunkt befinden und Segmente (Pi-1-PI, Pj-Pj+1, PI-1.PI, PJ-PJ-1), welche mit beiden Seiten der Segmente (Pi-Pj, PI-PJ) verbunden sind, welche den Schnittpunkt bilden und einer dritten Einschätzung (D_{new}), welche auf Grundlage von Abständen zwischen den Messpunkten (Pi-1, Pi, PI, PI-1, Pj+1, Pj, PJ, PJ+1) berechnet werden, welche in der zweiten Schätzung entlang eines neuen Pfads mit veränderten Verbindungen der Messpunkte, welche sich vor und nach dem Schnittpunkt befinden, benutzt werden, um den Schnittpunkt zu entflechten und angewinkelte Winkel zwischen Segmenten, die die Messpunkte (Pi, Pj, PI, PJ) verbinden, welche in der zweiten Schätzung entlang des neuen Pfads benutzt werden;
einen umgewandelten Pfadableitungsschritt zum Umwandeln des Pfads in den ursprünglichen Pfad, übereinstimmend mit einer Entscheidung, welche von dem Schnittpunkt des Auflösungsentscheidungsschritts resultiert, um einen Umwandlungspfad abzuleiten, welcher die spezifische Schnittpunktstopologie in dem Ursprungspfad entflechtet; und einen Messpfadeinrichtungsschritt zum Einrichten des veränderten Pfads, welcher an dem veränderten Pfadableitungsschritt zu einem Messpfad abgeleitet wird.

6. Bildmessverfahren nach Anspruch 5, wobei, wenn der angewinkelte Winkel, welcher zwischen den zwei Absclmitten, die die letzten zwei Messpunkte der rangfolgenbestimmten Messpunkte zu dem nächsten Kandidatenmesspunkt in der Messreihenfolge verbinden, definiert ist, sich 180° annähert, die erste Schätzung abnimmt, wobei, je kleiner die Summe des Abstands zwischen den letzten zwei Messpunkten der rangfolgenbestimmten Messpunkte ist, und dem Abstand zwischen dem Messpunkt, welcher den letzten Messrang der rangfolgenbestimmten Messpunkte und dem nächsten Kandidatenmesspunkt aufweist, um so kleiner wird die erste Schätzung,
wobei der nächste Messpunktbestimmungsschritt das Bestimmen des nächsten Kandidatenmesspunkts als nächsten Messpunkt einschließt, welcher die kleinste erste Schätzung der ersten Schätzungen aufweist, welche in dem ersten Schätzungsberechnungsschritt berechnet werden.

7. Bildmessverfahren nach Anspruch 5 oder 6, wobei, wenn angewinkelte Winkel zwischen Segmenten, welche Messpunkte verbinden, die vor und nach dem Schnittpunkt liegen, und Segmente, die mit beiden Seiten der Segmente verbunden sind, welche den Schnittpunkt bilden, sich 180° annähern, die zweite und dritte Schätzung abnimmt, wobei, je kleiner die Distanz (D_{new}) zwischen den Messpunkten ist, die zweite und dritte Schätzung (D_{old}, D_{new}) umso kleiner werden,
wobei der Schnittpunktentflechtungsentscheidungsschritt das Treffen einer Entscheidung einschließt, um den Schnittpunkt zu entflechten, wenn die berechnete dritte Schätzung (D_{new}) kleiner ist als die berechnete zweite Schätzung (D_{old}).

8. Bildmessverfahren nach einem der Ansprüche 5 bis 7, wobei die spezifische Schnittpunktstopologie der Ort eines 8-förmigen Schnittpunkts ist.

9. Ein computerausführbares Bildmessprogramm zum Bewegen eines Bildgebungsmittels in Bezug auf einen Messtisch, welcher ein zu messendes Objekt aufnimmt und zum Aufnehmen momentaner Bildinformation über das Objekt bei jedem von einer Vielzahl von Messorten, wobei dadurch eine Bildmessung durchgeführt wird, wobei das Programm umfasst:
einen Messpunktaufnahmeschritt zum Aufnehmen von Messpunkten (P₁-Pₘ);
einen ersten Messpunktbestimmungsschritt zum Bestimmen eines ersten Messpunkts (P₁) zum Beginn einer Messung zwischen den aufgenommenen Messpunkten;
einen zweiten Messpunktbestimmungsschritt zum Bestimmen eines zweiten Messpunkts (P₂), welcher nach dem ersten Messpunkt (P₁) gemessen werden soll;
**gekennzeichnet durch:**
einen ersten Schätzungsberechnungsscluitt des Berechnens einer ersten Schätzung auf Grundlage eines Abstands zwischen den zwei letzten Messpunkten der rangfolgebestimmten Messpunkte (P₁-Pₙ), welche Messrangfolgen aufweisen, die schon auf der Grundlage eines Abstands zwischen einem Messpunkt (Pₙ), welcher den letzten Messrang der rangfolgebestimmten Messpunkte (P₁-Pₙ) aufweist, und eines folgenden Kandidatenmesspunkts oder eines folgenden Messpunktskandidaten der der rangfolgenunbestimmten Messpunkte (Pₙ₊₁-Pₙ), welche keine bestimmten Messrangfolgen aufweisen, und auf der Grundlage von angewinkelten Winkeln, welche **durch** zwei Abschnitte definiert werden, die die letzten zwei Messpunkte Pₙₕ₋₁, Pₘ) der rangfolgenbestimmten Messpunkte (P₁-Pₙ) zu dem folgenden Kandidatenmesspunkt (Pₖ) in der Messrangfolge verbinden;
einen folgenden Messpunktbestimmungsschritt zum Bestimmen eines nächsten Messpunkts der folgenden Kandidatenmesspunkte auf Grundlage der ersten Schätzungen (D), welche berechnet werden, indem die rangfolgenunbestimmten Messpunkte als solche folgenden Kandidatenmesspunkte benutzt werden;
einen ursprünglichen Pfadableitungsschritt zum Ableiten eines ursprünglichen Pfads, welcher **durch** alle Messpunkte (P₁-Pₘ) von dem ersten Messpunkt über jeden Messpunkt sequentiell auf der Grundlage einer Bestimmung geht, welche von dem ersten Messpunktbestinunungsschritt resultiert, eine Bestimmung, welche von dem zweiten Messpunktbestimmungsschritt resultiert und einer Bestimmung, welche von dem folgenden Messpunktbestimmungsschritt resultiert;
einen Schnittpunktentflechtungsentscheidungsschritt zum Entscheiden, wann es eine spezifische Schnittpunktstopologie in dem Ursprungspfad gibt, ob der Schnittpunkt zu entflechten ist oder behalten werden soll auf der Grundlage einer zweiten Schätzung, die auf Grundlage von Abständen zwischen Messpunkten (Pi-1, Pi, Pj, Pj+1, PI-1, PI, PJ, PJ+1) entlang des ursprünglichen Pfads berechnet werden und vor und nach dem Schnittpunkt auf dem ursprünglichen Pfad liegen und abgewinkelte Winkel zwischen Abschnitten, die Messpunkte (Pi, Pj, PI, PJ) verbinden, welche vor und nach dem Schnittpunkt liegen und die Abschnitte (Pi-1-Pi, Pj-Pj+1, PI-1-PI, PJ-PJ+1), welche mit beiden Seiten der Abschnitte (Pi-Pj, PI-PJ) verbunden sind, welche den Schnittpunkt bilden, und einer dritten Schätzung, welche auf Grundlage von Abständen zwischen Messpunkten auf (Pi-1, Pi, Pj, Pj+1, PI-1, PI, PJ, PJ+1) berechnet werden, die in der zweiten Schätzung entlang eines neuen Pfads mit veränderten Verbindungen der Messpunkte, welche vor und nach dem Schnittpunkt liegen, benutzt werden, um die Schnittpunkte und abgewinkelten Winkel zwischen Abschnitten, die die Messpunkte (Pi, Pj, PI, PJ) verbinden, zu entflechten, welche in der zweiten Schätzung entlang des neuen Pfads benutzt werden; ein umgewandelter Pfadableitungsschritt zum Umwandeln des Pfads in den ursprünglichen Pfad in Übereinstimmung mit einer Entscheidung, welche von dem Schnittpunktentflechtungsentscheidungsschritt resultiert, um einen umgewandelten Pfad abzuleiten, welcher die spezifische Schnittpunktstopologie in dem ursprünglichen Pfad entflechtet; und ein Messpfadeinrichtungsschritt zum Einrichten des veränderten Pfads, welcher von dem veränderten Pfadableitungsschritt abgeleitet wird zu einem Messpfad.

10. Bildmessprogramm nach Anspruch 9, wobei, wenn der abgewinkelte Winkel, welcher zwischen zwei Abschnitten, die die letzten zwei Messpunkte der rangfolgenbestimmten Messpunkte verbinden, zu dem nächsten Kandidatenmesspunkt in der Messrangfolge definiert, sich 180° annähert, die erste Schätzung abnimmt, wobei, je kleiner die Summe des Abstands zwischen den letzten zwei Messpunkten der rangfolgenbestimmten Messpunkte und dem Abstand zwischen dem Messpunkt, welcher den letzten Messrang der rangfolgenbestimmten Messpunkte aufweist, und dem folgenden Kandidatenmesspunkt ist, die erste Schätzung umso kleiner wird.
wobei der folgende Messpunktbestimmungsschritt das Bestimmen des folgenden Kandidatenmesspunkts, welcher die kleinste Schätzung der ersten Schätzungen, welche in dem ersten Schätzungsberechnungsschritt berechnet wurden, aufweist, als den folgenden Messpunkt einschließt.

11. Bildmessprogramm nach Anspruch 9 oder 10, wobei, wenn der als angewinkelte Winkel zwischen Abschnitten, die Messpunkte verbinden, welche vor und nach dem Schnittpunkt liegen, und Segmente, welche mit beiden Seiten der Abschnitte verbunden sind, welche den Schnittpunkt bilden, sich 180° annähern, die zweite und dritte Schätzung abnehmen, wobei, je kleiner der Abstand (D_{new}) zwischen den Messpunkten ist, die zweite und die dritte Schätzung (D_{old}, D_{new}) umso kleiner werden,
wobei der Schnittpunktentflechtungsentscheidungsschritt das Treffen einer Entscheidung einschließt, um den Schnittpunkt zu entflechten, wenn die berechnete dritte Schätzung (D_{new}) kleiner ist als die berechnete zweite Schätzung (D_{old}).

12. Bildmessprogramm nach einem der Ansprüche 9 bis 11, wobei die spezifische Schnittpunktstopologie ein Ort eines 8-förmigen Schnittpunkts ist.

## Revendications

1. Un système de mesure d'image pour déplacer un moyen d'imagerie (17) par rapport à une platine de mesure (13) qui supporte un objet (12) à mesurer et pour prendre des informations d'images instantanées concernant l'objet (12) à n'importe quel emplacement d'une pluralité d'emplacements de mesure, effectuant ainsi la mesure d'image, le système comprenant :
un moyen d'acquisition de points de mesure (34) fonctionnel pour acquérir des points de mesure (P₁-Pₘ) ;
un premier moyen de détermination de points de mesure (361) fonctionnel pour déterminer un premier point de mesure (P₁) pour commencer une mesure parmi les points de mesure (P₁-Pₘ) acquis par le moyen d'acquisition de points de mesure (34) ; et
un second moyen de détermination de points de mesure (362) fonctionnel pour déterminer un second point de mesure (P₂) devant être mesuré consécutivement au premier point de mesure (P₁) ;
**caractérisé en ce qu'**il comprend en outre :
un premier moyen de calcul d'estimation (363) fonctionnel pour calculer une première estimation (D) en fonction d'une distance entre les deux derniers points de mesure (Pₙ₋₁, Pₙ) appartenant à des points de mesure d'ordre déterminé (P₁-Pₙ) ayant des ordres de mesure déjà déterminés, en fonction d'une distance entre un point de mesure (Pₙ) ayant le dernier ordre de mesure des points de mesure d'ordre déterminé (P₁-Pₙ) et un point de mesure candidat suivant (Pₖ) ou un point de mesure candidat suivant (Pₖ) appartenant à des points de mesure d'ordre indéterminé (Pₙ₊₁-Pₘ) n'ayant pas d'ordres de mesure déterminés, et en fonction d'un angle de coudage (Rₙ) spécifié entre deux segments reliant les deux derniers points de mesure (Pₙ₋₁,Pₙ) des points de mesure d'ordre déterminé (P₁-Pₙ) au point de mesure candidat suivant (Pₖ) dans l'ordre de mesure ;
un moyen de détermination de point de mesure suivant (363) fonctionnel pour déterminer un point de mesure suivant (Pₖ) des points de mesure candidats suivants (Pₙ₊₁-Pₘ) en fonction de premières estimations (D) calculées par le premier moyen de calcul d'estimations (363) en utilisant les points de mesure d'ordre indéterminé en tant que tels points de mesure candidats suivants ;
un moyen de dérivation de chemin initial (363) fonctionnel pour dériver un chemin initial qui passe par tous les points de mesure (P₁-Pₘ) depuis le premier point de mesure via tout point de mesure séquentiellement en fonction d'une détermination obtenue à partir du premier moyen de détermination de points de mesure (361), une détermination obtenue à partir du second moyen de détermination de points de mesure (362) et une détermination obtenue à partir du moyen de détermination de point de mesure suivant (363) ;
un moyen de décision de dissolution d'intersection (364) fonctionnel pour décider, lorsqu'il y a une topologie d'intersection spécifique dans le chemin initial, si l'intersection doit être dissoute ou conservée en fonction d'une seconde estimation (D_{old}) calculée en fonction de distances entre des points de mesure (Pᵢ₋₁, Pᵢ, Pⱼ, Pⱼ₊₁, P_{I-1}, P_{I}, P_{J}, P_{J+1}) le long du chemin initial et situés avant et après l'intersection sur le chemin initial et les angles de coudage entre des segments reliant les points de mesure (Pᵢ, Pⱼ, P_{I}, P_{J}) situés avant et après l'intersection et des segments (Pᵢ₋₁-Pᵢ, Pⱼ-Pⱼ₊₁, P_{I-1}-P_{I}, P_{J}-P_{J+1}) reliés aux deux côtés des segments (Pᵢ-Pⱼ, P_{I}-P_{J}) formant l'intersection, et une troisième estimation (D_{new}) calculée en fonction de distances entre les points de mesure (Pᵢ₋₁, Pᵢ, P_{I}, P_{I-1}, Pⱼ₊₁, Pⱼ, P_{J}, P_{J+1}) utilisés dans la seconde estimation le long d'un nouveau chemin avec des connexions modifiées des points de mesure situés avant et après l'intersection de manière à dissoudre l'intersection et les angles de coudage entre les segments reliant les points de mesure (Pᵢ, Pⱼ, P_{I}, P_{J}) utilisés dans la seconde estimation le long du nouveau chemin ;
un moyen de dérivation de chemin converti (365) fonctionnel pour convertir les chemins dans le chemin initial conformément à une décision provenant du moyen de décision de dissolution d'intersection (364) pour dériver le chemin converti qui dissout la topologie d'intersection spécifique dans le chemin initial ; et
un moyen d'établissement de chemin de mesure (366) fonctionnel pour établir le chemin converti dérivé au sein du moyen de dérivation de chemin converti (365) en un chemin de mesure.

2. Le système de mesure d'image selon la revendication 1, dans lequel lorsque l'angle de coudage spécifié entre deux segments reliant les deux derniers points de mesure (Pₙ₋₁, Pₙ) des points de mesure d'ordre déterminé (Pᵢ-Pₙ) au point de mesure candidat suivant (Pₖ) dans l'ordre de mesure approche 180°, la première estimation (D) diminue, dans lequel plus la somme de la distance entre les deux derniers points de mesure (Pₙ₋₁, Pₙ) des points de mesure d'ordre déterminé (P₁-Pₙ) et de la distance entre le point de mesure ayant le dernier ordre de mesure des points de mesure d'ordre déterminé (P₁-Pₙ) et le point de mesure candidat suivant (Pₖ) est faible, plus la première estimation (D) devient faible,
dans lequel le moyen de détermination de point de mesure suivant (363) détermine en tant que point de mesure suivant le point de mesure candidat suivant (Pₖ) ayant la plus faible première estimation (D) des premières estimations (D) calculées par le premier moyen de calcul d'estimation (363).

3. Le système de mesure d'image selon la revendication 1 ou 2, dans lequel, lorsque les angles de coudage entre les segments reliant les points de mesure situés avant et après l'intersection et les segments reliés aux deux côtés des segments formant l'intersection approchent 180°, les seconde et troisième estimations (D_{new}) diminuent, dans lequel plus la distance entre les points de mesure est faible, plus les seconde et troisième estimations (D_{old}, D_{new}) deviennent faibles,
dans lequel le moyen de décision de dissolution d'intersection (364) prend la décision de dissoudre l'intersection lorsque la troisième estimation calculée (D_{new}) est plus faible que la seconde estimation calculée (D_{old}).

4. Le système de mesure d'image selon l'une des revendications 1 à 3, dans lequel la topologie d'intersection spécifique est un emplacement d'intersection en forme de huit.

5. Un procédé de mesure d'image pour déplacer un moyen d'imagerie par rapport à une platine de mesure qui supporte un objet à mesurer et pour prendre des informations d'images instantanées concernant l'objet à n'importe quel emplacement d'une pluralité d'emplacements de mesure, effectuant ainsi la mesure d'image, le procédé comprenant :
une étape d'acquisition de points de mesure pour acquérir des points de mesure (P₁-Pₘ) ;
une première étape de détermination de points de mesure pour déterminer un premier point de mesure (P₁) pour commencer une mesure parmi les points de mesure (P₁-Pₘ) acquis ; et
une seconde étape de détermination de points de mesure (362) pour déterminer un second point de mesure (P₂) devant être mesuré consécutivement au premier point de mesure (P₁) ;
**caractérisé par** :
une première étape de calcul d'estimation pour calculer une première estimation (P₁) en fonction d'une distance entre les deux derniers points de mesure (Pₙ₋₁, Pₙ) appartenant à des points de mesure d'ordre déterminé (P₁-Pₙ) ayant des ordres de mesure déjà déterminés, en fonction d'une distance entre un point de mesure (Pₙ) ayant le dernier ordre de mesure des points de mesure d'ordre déterminé (P₁-Pₙ) et un point de mesure candidat suivant (Pₖ) ou un point de mesure candidat suivant (Pₖ) appartenant à des points de mesure d'ordre indéterminé (Pₙ₊₁-Pₘ) n'ayant pas d'ordres de mesure déterminés, et en fonction d'un angle de coudage (Rₙ) spécifié entre deux segments reliant les deux derniers points de mesure (Pₙ₋₁,Pₙ) des points de mesure d'ordre déterminé (P₁-Pₙ) au point de mesure candidat suivant (Pₖ) dans l'ordre de mesure ;
une étape de détermination de point de mesure suivant pour déterminer un point de mesure suivant (Pₖ) des points de mesure candidats suivants (Pₙ₊₁-Pₘ) en fonction de premières estimations (D) calculées en utilisant les points de mesure d'ordre indéterminé en tant que tels points de mesure candidats suivants ;
une étape de dérivation de chemin initial pour dériver un chemin initial qui passe par tous les points de mesure (P₁-Pₘ) depuis le premier point de mesure via tout point de mesure séquentiellement en fonction d'une détermination obtenue à partir de la première étape de détermination de points de mesure, une détermination obtenue à partir de la seconde étape de détermination de points de mesure et une détermination obtenue à partir de l'étape de détermination de point de mesure suivant ;
une étape de décision de dissolution d'intersection pour décider, lorsqu'il y a une topologie d'intersection spécifique dans le chemin initial, si l'intersection doit être dissoute ou conservée en fonction d'une seconde estimation calculée en fonction de distances entre des points de mesure (Pᵢ₋₁, Pᵢ, Pⱼ, Pⱼ₊₁, P_{I-1}, P_{I}, P_{J}, P_{J+1}) le long du chemin initial et situés avant et après l'intersection sur le chemin initial et les angles de coudage entre des segments reliant les points de mesure (Pᵢ, Pⱼ, P_{I}, P_{J}) situés avant et après l'intersection et des segments (Pᵢ₋₁-Pᵢ, Pⱼ-P_{j+1,} P_{I-1}-P_{I}, P_{J}-P_{J+1}) reliés aux deux côtés des segments (Pᵢ-Pⱼ, P_{I}-P_{J}) formant l'intersection, et une troisième estimation (D_{new}) calculée en fonction de distances entre les points de mesure (Pᵢ₋₁, Pᵢ, P_{I}, P_{I-1}, Pⱼ₊₁, Pⱼ, P_{J}, P_{J+1}) utilisés dans la seconde estimation le long d'un nouveau chemin avec des connexions modifiées des points de mesure situés avant et après l'intersection de manière à dissoudre l'intersection et les angles de coudage entre les segments reliant les points de mesure (Pᵢ, Pⱼ, P_{I}, P_{J}) utilisés dans la seconde estimation le long du nouveau chemin ;
une étape de dérivation de chemin converti pour convertir les chemins dans le chemin initial conformément à une décision provenant de l'étape de décision de dissolution d'intersection pour dériver un chemin converti qui dissout la topologie d'intersection spécifique dans le chemin initial ; et une étape d'établissement de chemin de mesure pour établir le chemin converti dérivé à l'étape de dérivation de chemin converti en un chemin de mesure.

6. Le procédé de mesure d'image selon la revendication 5, dans lequel lorsque l'angle de coudage spécifié entre deux segments reliant les deux derniers points de mesure des points de mesure d'ordre déterminé au point de mesure candidat suivant dans l'ordre de mesure approche 180°, la première estimation diminue, dans lequel plus la somme de la distance entre les deux derniers points de mesure des points de mesure d'ordre déterminé et de la distance entre le point de mesure ayant le dernier ordre de mesure des points de mesure d'ordre déterminé et le point de mesure candidat suivant est faible, plus la première estimation devient faible,
dans lequel l'étape de détermination de point de mesure suivant détermine en tant que point de mesure suivant le point de mesure candidat suivant ayant la plus faible première estimation des premières estimations calculées à la première étape de calcul d'estimation.

7. Le procédé de mesure d'image selon la revendication 5 ou 6, dans lequel, lorsque les angles de coudage entre les segments reliant les points de mesure situés avant et après l'intersection et les segments reliés aux deux côtés des segments formant l'intersection approchent 180°, les seconde et troisième estimations diminuent, dans lequel plus la distance (D_{new}) entre les points de mesure est faible, plus les seconde et troisième estimations (D_{old}, D_{new}) deviennent faibles,
dans lequel l'étape de décision de dissolution d'intersection prend la décision de dissoudre l'intersection lorsque la troisième estimation calculée (D_{new}) est plus faible que la seconde estimation calculée (D_{old}).

8. Le procédé de mesure d'image selon l'une des revendications 5 à 7, dans lequel la topologie d'intersection spécifique est un emplacement d'intersection en forme de huit.

9. Un programme de mesure d'image, exécutable par ordinateur, pour déplacer un moyen d'imagerie par rapport à une platine de mesure qui supporte un objet à mesurer et pour prendre des informations d'images instantanées concernant l'objet à n'importe quel emplacement d'une pluralité d'emplacements de mesure, effectuant ainsi la mesure d'image, le programme comprenant :
une étape d'acquisition de points de mesure pour acquérir des points de mesure (P₁-Pₘ) ;
une première étape de détermination de points de mesure pour déterminer un premier point de mesure (P₁) pour commencer une mesure parmi les points de mesure (P₁-Pₘ) acquis ; et
une seconde étape de détermination de points de mesure (362) pour déterminer un second point de mesure (P₂) devant être mesuré consécutivement au premier point de mesure (P₁) ;
**caractérisé par** :
une première étape de calcul d'estimation pour calculer une première estimation (P₁) en fonction d'une distance entre les deux derniers points de mesure (Pₙ₋₁, Pₙ) appartenant à des points de mesure d'ordre déterminé (P₁-Pₙ) ayant des ordres de mesure déjà déterminés, en fonction d'une distance entre un point de mesure (Pₙ) ayant le dernier ordre de mesure des points de mesure d'ordre déterminé (P₁-Pₙ) et
un point de mesure candidat suivant ou un point de mesure candidat suivant appartenant à des points de mesure d'ordre indéterminé (Pₙ₊₁-Pₘ) n'ayant pas d'ordres de mesure déterminés, et en fonction d'un angle de coudage spécifié entre deux segments reliant les deux derniers points de mesure (Pₙ₋₁,Pₙ) des points de mesure d'ordre déterminé (P₁-Pₙ) au point de mesure candidat suivant (Pₖ) dans l'ordre de mesure ;
une étape de détermination de point de mesure suivant pour déterminer un point de mesure suivant des points de mesure candidats suivants en fonction de premières estimations (D) calculées en utilisant les points de mesure d'ordre indéterminé en tant que tels points de mesure candidats suivants ;
une étape de dérivation de chemin initial pour dériver un chemin initial qui passe par tous les points de mesure (P₁-Pₘ) depuis le premier point de mesure via tout point de mesure séquentiellement en fonction d'une détermination obtenue à partir de la première étape de détermination de points de mesure, une détermination obtenue à partir de la seconde étape de détermination de points de mesure et une détermination obtenue à partir de l'étape de détermination de point de mesure suivant ;
une étape de décision de dissolution d'intersection pour décider, lorsqu'il y a une topologie d'intersection spécifique dans le chemin initial, si l'intersection doit être dissoute ou conservée en fonction d'une seconde estimation calculée en fonction de distances entre des points de mesure (Pᵢ₋₁, Pᵢ, Pⱼ, Pⱼ₊₁, P_{I-1}, P_{I}, P_{J}, P_{J+1}) le long du chemin initial et situés avant et après l'intersection sur le chemin initial et les angles de coudage entre des segments reliant les points de mesure (Pᵢ, Pⱼ, P_{I}, P_{J}) situés avant et après l'intersection et des segments (Pᵢ₋₁-Pᵢ, Pⱼ-Pⱼ₊₁, P_{I-1}-P_{I}, P_{J}-P_{J+1}) reliés aux deux côtés des segments (Pᵢ-Pⱼ, P_{I}-P_{J}) formant l'intersection, et une troisième estimation calculée en fonction de distances entre les points de mesure (Pᵢ₋₁, Pᵢ, P_{I}, P_{I-1}, Pⱼ₊₁, Pⱼ, P_{J}, P_{J+1}) utilisés dans la seconde estimation le long d'un nouveau chemin avec des connexions modifiées des points de mesure situés avant et après l'intersection de manière à dissoudre l'intersection et les angles de coudage entre les segments reliant les points de mesure (Pᵢ, Pⱼ, P_{I}, P_{J}) utilisés dans la seconde estimation le long du nouveau chemin ; une étape de dérivation de chemin converti pour convertir les chemins dans le chemin initial conformément à une décision provenant de l'étape de décision de dissolution d'intersection pour dériver un chemin converti qui dissout la topologie d'intersection spécifique dans le chemin initial ; et une étape d'établissement de chemin de mesure pour établir le chemin converti dérivé à l'étape de dérivation de chemin converti en un chemin de mesure.

10. Le programme de mesure d'image selon la revendication 9, dans lequel lorsque l'angle de coudage spécifié entre deux segments reliant les deux derniers points de mesure des points de mesure d'ordre déterminé au point de mesure candidat suivant dans l'ordre de mesure approche 180°, la première estimation diminue, dans lequel plus la somme de la distance entre les deux derniers points de mesure des points de mesure d'ordre déterminé et de la distance entre le point de mesure ayant le dernier ordre de mesure des points de mesure d'ordre déterminé et le point de mesure candidat suivant est faible, plus la première estimation devient faible,
dans lequel l'étape de détermination de point de mesure suivant détermine en tant que point de mesure suivant le point de mesure candidat suivant ayant la plus faible première estimation des premières estimations calculées à la première étape de calcul d'estimation.

11. Le programme de mesure d'image selon la revendication 9 ou 10, dans lequel, lorsque les angles de coudage entre les segments reliant les points de mesure situés avant et après l'intersection et les segments reliés aux deux côtés des segments formant l'intersection approchent 180°, les seconde et troisième estimations diminuent, dans lequel plus la distance (D_{new}) entre les points de mesure est faible, plus les seconde et troisième estimations (D_{old}, D_{new}) deviennent faibles, dans lequel l'étape de décision de dissolution d'intersection prend la décision de dissoudre l'intersection lorsque la troisième estimation calculée (D_{new}) est plus faible que la seconde estimation calculée (D_{old}).

12. Le programme de mesure d'image selon l'une des revendications 9 à 11, dans lequel la topologie d'intersection spécifique est un emplacement d'intersection en forme de huit.
